# EUROPEAN PATENT APPLICATION

(11) **EP 1 396 354 A1**
(43) Date of publication of application: **10.03.2004**
(21) Application number: 02733419.2
(22) Date of filing: 07.06.2002
(51) Int. Cl.: B60B 35/14, B60B 35/18, F16C 35/063

(54) **BEARING DEVICE FOR DRIVE WHEEL AND METHOD OF MANUFACTURING THE BEARING DEVICE**

(30) Priority: 13.06.2001 JP 2001178637; 23.07.2001 JP 2001221588; 27.08.2001 JP 2001256547
(71) Applicant: NTN CORPORATION, Osaka-shi Osaka 550-0003 (JP)
(72) Inventor: TAJIMA, Eiji c/o NTN CORPORATION, Iwata-shi, Shizuoka 438-0037 (JP); FUKUSHIMA, Shigeaki c/o NTN CORPORATION, Iwata-shi, Shizuoka 438-0037 (JP); UMEKIDA, Mitsuru c/o NTN CORPORATION, Iwata-shi, Shizuoka 438-0037 (JP); OGURA, Hiroyuki c/o NTN CORPORATION, Iwata-shi, Shizuoka 438-0037 (JP)
(74) Representative: Hillier, Peter
(86) International application number: PCT/JP2002/005704
(87) International publication number: WO 2002/102608

(57) **Abstract**

A compact bearing device for a drive wheel is provided, which removes backlash within the joint between a wheel hub and a constant velocity universal joint, and increases the rigidity of the bearing device. There is provided a drive wheel bearing device in which a wheel hub and a double-row bearing are integrated into a single unit, and an outer joint member of a constant velocity universal joint is engaged inside the unit via a serrated section. In this structure, at least one of the inner races of the double-row bearing is formed on a separate inner ring engaged onto the wheel hub, irregularities are formed on the outer peripheral surface of the wheel hub, and radial expansion swaging of the wheel hub is used to cause the irregularities to bite into the inner peripheral surface of the inner ring, thereby fastening the wheel hub and the inner ring together through a plastic deformation section.

## Description

### BACKGROUND OF THE INVENTION

### 1. Field of the Invention

The present invention relates to a bearing device for a drive wheel, which supports the drive wheel of an automobile (the front wheels of a FF car, the rear wheels of a FR car, or all the wheels of a 4WD car) in a freely rotatable manner relative to the body of the automobile, as well as a method of manufacturing such a bearing device.

### 2. Description of the Related Art

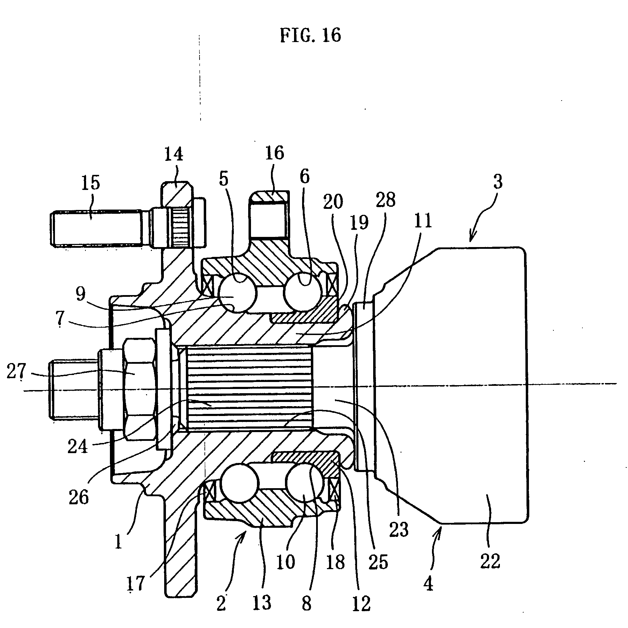

Many different types of bearing devices have been proposed for the drive wheels of vehicles, depending on the actual application of the bearing device. For example, the bearing device for a drive wheel shown in Fig. 16 comprises a structure in which a wheel hub 1 and a double-row bearing 2 are integrated into a single unit, and an outer joint member 4 of a constant velocity universal joint 3 is press fitted inside the inner periphery of the wheel hub 1 to enable the transmission of torque.

The bearing 2 is a double-row angular contact ball bearing comprising a double row of rolling elements 9, 10 formed between a series of race surfaces 5 to 8 as the principal elements. In this bearing device, of the two race surfaces 7, 8, one of the race surfaces 7 is formed directly on the outer peripheral surface of the wheel hub 1, and the other race surface 8 is formed on the outer peripheral surface of an inner ring 12 engaged onto a narrow diameter end portion 11 of the wheel hub 1. The double-row race surfaces 5, 6 are formed on the inner peripheral surface of an outer ring 13.

The wheel hub 1 comprises a wheel mounting flange 14 for mounting a vehicle wheel (not shown in the figure), and hub bolts 15 for securing a wheel disc are provided at equal intervals around the circumferential direction of the wheel mounting flange 14. The outer ring 13 comprises a body mounting flange 16 for attaching to the vehicle body (not shown in the figure), and this body mounting flange 16 is secured with bolts to a knuckle that extends from the vehicle suspension.

A pair of seals 17, 18 that seal the toroidal spaces between the outer ring 13 and the wheel hub 1, and the outer ring 13 and the inner ring 12 respectively, are engaged inside the ends of the outer ring 13, within the openings at both ends of the bearing 2, thereby preventing leakage of the grease used to fill the inside of the bearing, and preventing penetration of water or contaminants into the bearing.

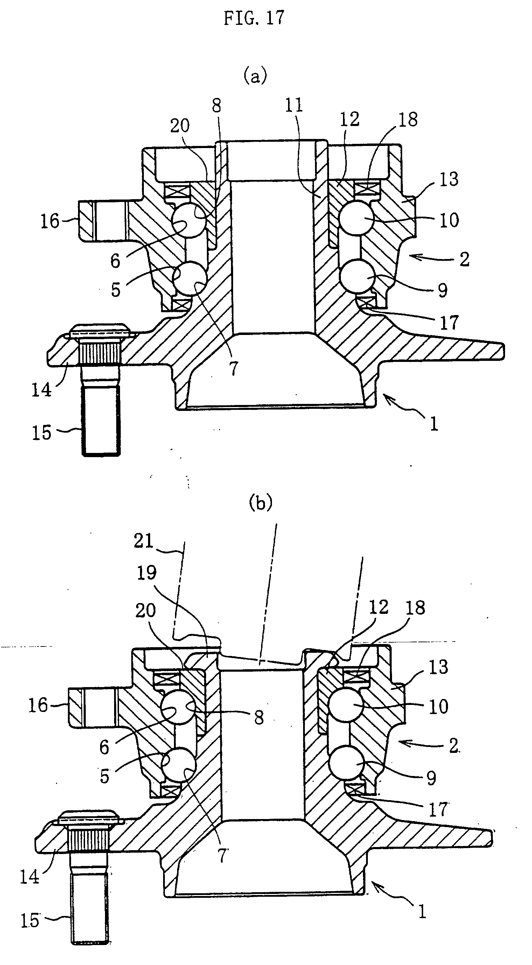

In this bearing device, the inner ring 12 is engaged onto the outer periphery of the narrow diameter end portion 11 of the wheel hub 1, the wheel hub 1 and the double-row bearing 2 are integrated together into a single unit by using plastic deformation to swage the narrow diameter end portion 11 of the wheel hub 1, and this swaged portion 19 is engaged against the inboard edge surface 20 of the inner ring 12, thereby preventing removal of the inner ring 12, and preloading the bearing 2. This swaging of the narrow diameter end portion 11 of the wheel hub 1 is conducted using the procedure shown in Fig. 17(a) and (b). Fig. 17(a) shows the state prior to swaging, and Fig. 17(b) shows the state following swaging. With the inner ring 12 press fitted onto the wheel hub 1 as shown in Fig. 17(a), the narrow diameter end portion 11 of the wheel hub 1 is swaged with an oscillation punch 21 as shown in Fig. 17(b).

The constant velocity universal joint 3 comprises an inner joint member, and an outer joint member 4 formed from a mouth portion 22 that houses a ball and a retainer, and an axial portion 23 with a serrated portion 24 formed on the outer peripheral surface, which extends from the mouth portion 22 in an axial direction shown in Fig. 16. This axial portion 23 of the outer joint member 4 is inserted through a through-hole 26 in the wheel hub 1, and the serrated portions 24, 25 formed on the outer peripheral surface of the axial portion 23 and the inner peripheral surface of the through-hole 26, respectively, engage to enable the transmission of torque. The constant velocity universal joint 3 is secured to the wheel hub 1 by tightening a nut 27 onto the end of the axial portion 23.

In this bearing device, engaging the swaged portion 19 of the wheel hub 1 against the inboard edge surface 20 of the inner ring 12 prevents removal of the inner ring 12 and achieves preloading of the bearing 2. Because the preloading of the bearing 2 is performed by this swaging of the narrow diameter end portion 11 of the wheel hub 1, there is no need to use the tightening force of the outer joint member 4 by the nut 27 to effect preloading of the bearing 2, and consequently the outer joint member 4 can be secured by the nut 27 at a level of tightening that simply prevents removal from the wheel hub 1.

Hence this type of bearing device has a construction in which the wheel hub 1 and the double-row bearing 2 are integrated into a single unit, the axial portion 23 of the outer joint member 4 is press fitted into the through-hole 26 of the wheel hub 1, thereby engaging the serrated portions 24, 25, and the outer joint member 4 is then secured to the wheel hub 1 by tightening the nut 27. In this construction, the swaged portion 19 formed at the narrow diameter end portion 11 of the wheel hub 1 contacts a shoulder portion 28 of the outer joint member 4. However, the surface of the swaged portion 19 that contacts the shoulder portion 28 of the outer joint member 4 is not a flat surface, and consequently when the axial portion 23 of the outer joint member 4 is tightened to the wheel hub 1 using the nut 27, there is a strong possibility of wear developing between the shoulder portion 28 of the outer joint member 4 and the swaged portion 19 of the wheel hub 1, increasing the danger of backlash.

Furthermore, in structures in which the wheel hub 1 and the double-row bearing 2 are integrated into a single unit by using oscillation based plastic deformation of the narrow diameter end portion 11 of the wheel hub 1 to form the swaged portion 19, the axial dimensions of the wheel hub 1 must be increased by an amount equivalent to this swaged portion 19, meaning the overall axial dimensions of the bearing device must increase, making it difficult to produce more compact bearing devices.

### SUMMARY OF THE INVENTION

An object of the present invention is to provide a compact bearing device, which removes backlash within the joint between a wheel hub and a constant velocity universal joint, and increases the rigidity of the bearing device.

A bearing device according to the present invention is a wheel bearing device in which a wheel hub and a double-row bearing are integrated into a single unit, and an outer joint member of a constant velocity universal joint is engaged inside any one of the wheel hub and an inner ring of the bearing via torque transmission means, wherein at least one of race surfaces of the double-row bearing is formed on a separate inner ring that is engaged onto the wheel hub, irregularities are formed on one of engagement surfaces on any one of the wheel hub and the inner ring, and by causing the irregularities to bite into the other engagement surface, the wheel hub and the inner ring are fastened together by plastic deformation.

In this manner, by forming at least one of the race surfaces of the double-row bearing on a separate inner ring that is engaged onto the wheel hub, forming irregularities on one of the engagement surfaces on either the wheel hub or the inner ring, and causing these irregularities to bite into the other engagement surface, thereby joining the wheel hub and the inner ring together by plastic deformation, an outer joint member of the constant velocity universal joint can be secured to the wheel hub with a nut, while the inboard end surface of the inner ring is in contact with a shoulder portion of the outer joint member. Because the inboard end surface of the inner ring contacted by the shoulder portion of the outer joint member is a flat surface, wear does not develop between the shoulder portion of the outer joint member and the inboard end portion of the inner ring, even when the outer joint member is tightened onto the wheel hub with a nut. Furthermore, because a conventional type of swaged portion produced by oscillation type swaging does not exist between the shoulder portion of the outer joint member and the inboard end surface of the inner ring, the axial dimension of the bearing device can be reduced. For the above reasons, a more compact bearing device can be provided in which backlash in the joint between the wheel hub and the constant velocity universal joint can be prevented, and the rigidity of the bearing device can be increased.

By using a construction such as that described above, in which irregularities formed on one of the engagement surfaces on either the wheel hub or the inner ring are caused to bite into the other engagement surface, thereby fastening the wheel hub and the inner ring together by plastic deformation, the wheel hub and the inner ring can be integrated together into a single unit, and the plastic deformation portion prevents removal of the inner ring, and also preloads the bearing.

The present invention also provides a construction such as that described above, wherein a spigot joint is formed between an inner diameter of the more inwardly positioned member of the wheel hub and the inner ring, and an outer diameter of the outer joint member. By forming a spigot joint in this manner, between the inner diameter of the more inwardly positioned member of the wheel hub and the inner ring, and the outer diameter of the outer joint member, a bearing device with a high degree of rigidity relative to a moment load can be produced with ease.

Furthermore, a method of manufacturing a bearing device according to the present invention comprises the steps of integrating a wheel hub and a double-row bearing into a single unit, engaging an outer joint member of a constant velocity universal joint inside the wheel hub via torque transmission means, forming at least one of race surfaces of the double-row bearing on a separate inner ring engaged onto the wheel hub, forming irregularities on one of engagement surfaces on any one of the wheel hub and the inner ring, causing the irregularities to bite into the other engagement surface thereby fastening the wheel hub and the inner ring together by plastic deformation, and cutting the inner diameter of this joint portion to a predetermined dimension to form a spigot joint to the outer joint member.

Provided the wheel hub and the inner ring are joined through plastic deformation, and the inner diameter of this joint portion is subsequently cut to a predetermined dimension and a spigot joint formed with the outer joint member, the spigot joint can be formed with ease.

In the method described above, following the fastening of the wheel hub and the inner ring through plastic deformation, a serrated portion is preferably formed on the inner diameter of any one of the wheel hub and the inner ring, before the outer joint member is then engaged inside this serrated section. This is because in those cases where the wheel hub and the inner ring are fastened together by plastic deformation, the inner diameter directly below the joint portion must have a smaller diameter than the other regions prior to the plastic deformation, and consequently forming the serrated portion in advance on the inner diameter of the wheel hub or the inner ring is difficult. What is described here as a "serrated portion" also includes other non-serrated splines.

Furthermore, another object of the present invention is to provide a bearing device for a drive wheel, which suffers no loosening of the joint portion even if a large moment load acts upon the device, and enables precise preloading to produce a suitable preload quantity.

This aspect of the present invention utilizes a drive wheel bearing device, in which a wheel hub with an integrated wheel mounting flange at one end; a bearing portion comprising an outer member with an inner periphery that forms double-row race surfaces, an inner member with an outer periphery that forms double-row race surfaces that oppose the race surfaces of the outer member, and double-row rolling elements housed between the race surfaces of the outer member and the inner member; and an outer joint member of a constant velocity universal joint are integrated together into a single unit, so that rotation of the outer joint member is transmitted to the wheel hub, and the wheel hub is able to freely rotate relative to the vehicle body, wherein at least one of the double-row race surfaces formed on the inner member is formed on a separate inner ring, hardened irregularities are formed on a radially more outwardly positioned engagement portion of any one of the wheel hub and the outer joint member, and the diameter of the radially more inwardly positioned member is expanded so as to bite into the irregularities, thereby swaging the engagement portion and plastically fastening the wheel hub and the outer joint member together.

Because one of the inner race surfaces is formed on the separate inner ring in the manner described above, when the inwardly positioned member at the engagement portion between the wheel hub and the outer joint member is expanded in diameter, even if the radially more outwardly positioned member undergoes some expansion, there is no direct effect on the inner ring, and the preset, suitable preload level can be maintained.

Furthermore, in the above construction, if the separate inner ring is engaged onto the outside of the outer joint member, and one of the double-row race surfaces formed on the inner member is formed as an integrated portion of the outer diameter of the outer joint member, then the problems associated with the conventional technology, namely the difficulty in reducing the size and weight of the device, can be resolved, deformation of the bearing portion due to diameter enlargement can be prevented, and precision can be improved.

In the above construction, if the separate inner ring is engaged onto the outside of the wheel hub, and one of the double-row race surfaces formed on the inner member is formed as an integrated portion of the outer diameter of the wheel hub, then deformation of the bearing portion due to diameter enlargement can be prevented, precision can be improved, and any effects of increased internal temperature within the constant velocity universal joint on the bearing portion can be suppressed, enabling the life of the bearing to be extended.

In the above construction, if the radially inwardly positioned member at the engagement portion between the wheel hub and the outer joint member is hollow, then not only can the weight of the structure be reduced, but the air cooling effect on the bearing portion during operation suppresses internal temperature increase within the bearing, enabling further improvements in the life of the bearing.

In the above construction, by setting a difference in surface hardness between the radially inwardly positioned member at the engagement portion between the wheel hub and the outer joint member, and the aforementioned irregularities to at least 30 HRC, collapse of the irregularities during the swaging process can be reliably prevented, and a strong plastic tightening can be realized that will not loosen, even on application of a moment load.

In the above construction, because the separate inner ring is abutted axially against, and thus sandwiched between, the wheel hub and the outer joint member, the precision during assembly of the unit can be improved, enabling very precise preloading.

In the above construction, if the internal clearance of the bearing portion is made negative, the rigidity of the device can be increased, and the problems of operational stability and bearing lifespan associated with the conventional technology can be resolved.

In addition, another object of the present invention is to provide a bearing device for a drive wheel, which suffers no loosening of the joint portion even if a large moment load acts upon the device, enables precise preloading to produce a suitable preload quantity, and also enables cost reductions through improved assembly.

This aspect of the present invention utilizes a drive wheel bearing device, in which a wheel hub with an integrated wheel mounting flange, a double-row rolling bearing, and an outer joint member of a constant velocity universal joint are integrated together into a single unit, so that a wheel is able to freely rotate relative to a vehicle body, wherein the wheel hub, the outer joint member and the rolling bearing are engaged onto the outside of a circular cylindrically shaped connection member, with the rolling bearing sandwiched between the wheel hub and the outer joint member, and a diameter of the circular cylindrically shaped connection member is expanded outward so as to bite into irregularities formed on an inner diameter of the wheel hub and the outer joint member, thereby plastically fastening the wheel hub and the outer joint member to the circular cylindrically shaped connection member.

Because the wheel hub, the double-row rolling bearing, and the outer joint member are formed separately, when the diameter of the circular cylindrically shaped connection member is expanded outward, even if the radially more outwardly positioned wheel hub or outer joint member undergo some expansion, there is no direct effect on the rolling bearing, and the preset, suitable preload level can be maintained.

In this construction, a hardened layer is formed on a surface of the irregularities formed on the inner diameter of the wheel hub and the outer joint member, and consequently collapse of the irregularities during swaging can be prevented, and a strong plastic fastening can be realized that will not loosen, even on application of a moment load.

In the above construction, by setting a difference in surface hardness between the irregularities formed on the inner diameter of the wheel hub and the outer joint member, and the circular cylindrically shaped connection member to at least 30 HRC, collapse of the irregularities during swaging process can be reliably prevented.

In the above construction, by forming a hardened layer on contact surfaces where the wheel hub and the outer joint member contact the rolling bearing, fretting at the contact surfaces can be prevented, enabling the initially set bearing preloading to be maintained, and thereby enabling the life of the bearing to be extended.

In the above construction, the rolling bearing has an integrated vehicle body mounting flange at an outside periphery thereof, and comprises an inner periphery thereof equipped with an outer ring, on which double-row race surfaces are formed, a pair of inner rings, on which are formed other race surfaces that oppose the double-row race surfaces, double-row rolling elements housed between the race surfaces, and a retainer that retains these rolling elements in a freely rotatable manner, and consequently the fatigue life can be improved beyond that of a bearing in which the bearing race surfaces are formed directly on the wheel hub or the outer joint member, and the bearing can be standardized, making mass production easier, and reducing costs even further.

In the above construction, because an internal clearance of the rolling bearing is made negative, the rigidity of the bearing device itself can be increased, meaning the problems of operational stability and bearing lifespan associated with the conventional technology can be resolved.

### BRIEF DESCRIPTION OF THE DRAWINGS

Fig. 1 is a cross-sectional view of an embodiment of a wheel bearing device according to the present invention, with some sections of the bearing device for a drive wheel omitted;
Fig. 2 is an enlarged partial sectional view showing the radial expansion type swaging portion between the wheel hub and the inner ring from Fig. 1;
Fig. 3 is an enlarged partial sectional view describing the procedure for machining the inner diameter of the wheel hub of Fig. 2;
Fig. 4 is an enlarged partial sectional view showing a serrated portion formed on the inner peripheral surface of the wheel hub of Fig. 3;
Fig. 5 is a cross-sectional view of another embodiment of a wheel bearing device according to the present invention, with some sections of the bearing device for a drive wheel omitted;
Fig. 6 is an enlarged partial sectional view showing the radial expansion type swaging portion between the wheel hub and the inner ring from Fig. 5;
Fig. 7 is an enlarged partial sectional view describing the procedure for machining the inner diameter of the wheel hub of Fig. 6;
Fig. 8 is an enlarged partial sectional view showing a serrated portion formed on the inner peripheral surface of the wheel hub of Fig. 7;
Fig. 9 is a longitudinal sectional view showing a bearing device for a drive wheel in which the wheel hub, the bearing and a constant velocity universal joint are integrated together into a single unit;
Fig. 10 is a longitudinal sectional view showing another embodiment of the present invention;
Figs. 11(a) and 11(b) are enlarged views showing two examples of irregular sections according to the present invention;
Fig. 12 is a front view showing a jig of the present invention, which is used for expanding the diameter of an engagement section;
Fig. 13 is a longitudinal sectional view showing yet another embodiment of the present invention;
Fig. 14 is a longitudinal sectional view showing yet another embodiment of the present invention;
Fig. 15 is an explanatory diagram showing the process for expanding the inner diameter of a circular cylindrically shaped connection member;
Fig. 16 is a cross-sectional view showing a conventional bearing device for a drive wheel; and
Fig. 17(a) is a cross-sectional view showing the state prior to oscillation type swaging of the narrow diameter end portion of the wheel hub, during the manufacture of the bearing device of Fig. 16, and Fig. 17(b) is a cross-sectional view showing the state following oscillation type swaging of the narrow diameter end portion of the wheel hub.

### DETAILED DESCRIPTION OF THE PREFERRED EMBODIMENTS

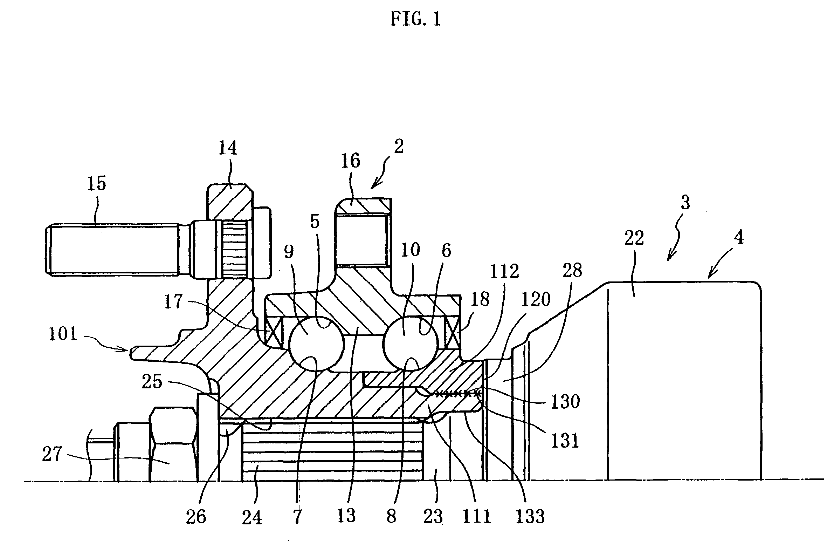

A bearing device according to one embodiment shown in Fig. 1 comprises a wheel hub 101, a double-row bearing 2, and a constant velocity universal joint 3 as primary structural elements. When the bearing device is mounted to the vehicle, the side facing the outside of the vehicle is termed the outboard side (the left hand side in the figure), and the side facing the center of the vehicle is termed the inboard side (the right hand side in the figure).

The bearing 2 is a double-row angular contact ball bearing comprising double-row rolling elements 9, 10 formed between double-row race surfaces 5 to 8 as the principal elements. In this bearing device, of the two race surfaces 7, 8, one of the race surfaces 7 is formed directly on the outer peripheral surface of the wheel hub 101, and the other race surface 8 is formed on the outer peripheral surface of an inner ring 112 that is engaged onto a narrow diameter end portion 111 of the wheel hub 101. The double-row race surfaces 5, 6 are formed on the inner peripheral surface of an outer ring 13.

The wheel hub 101 comprises a wheel mounting flange 14 for mounting a vehicle wheel (not shown in the figure), and hub bolts 15 for securing a wheel disc are provided at equal intervals around the circumferential direction of the wheel mounting flange 14. The outer ring 13 comprises a body mounting flange 16 for attaching to the vehicle body (not shown in the figure), and this body mounting flange 16 is secured with bolts to a knuckle that extends from the vehicle suspension.

A pair of seals 17, 18 that seal the toroidal spaces between the outer ring 13 and the wheel hub 101, and the outer ring 13 and the inner ring 112 respectively, are engaged inside the ends of the outer ring 13, within the openings at both ends of the bearing 2, thereby preventing leakage of the grease used to fill the inside of the bearing, and preventing penetration of water or contaminants into the bearing.

In this bearing device, the inner ring 112 is engaged onto the outer periphery of the narrow diameter end portion 111 of the wheel hub 101, and the narrow diameter end portion 111 of the wheel hub 101 is subjected to a plastic deformation involving a radial expansion swaging, thereby fastening the narrow diameter end portion 111 of the wheel hub 101 and the inner ring 112 together via a plastic deformation portion 130 formed between the two components. This plastic deformation portion 130 generated by the radial expansion swaging combines the wheel hub 101 and the double-row bearing 2 into a single integrated unit, with the plastic deformation portion 130 both preventing removal of the inner ring 112, and preloading the bearing 2.

This radial expansion swaging of the narrow diameter end portion 111 of the wheel hub 101 is conducted by forming irregularities 131 (in the drawings, the range over which the irregularities 131 are formed is indicated by the X symbols) on the outer peripheral surface of the narrow diameter end portion 111 of the wheel hub 101, using knurling or the like, and then using a radial expansion process, performed from the inner diameter side of the narrow diameter end portion 111, to cause the irregularities 131 to bite into the inner peripheral surface of the inner ring 112, thereby fastening the wheel hub 101 and the inner ring 112 together through plastic deformation.

The shape of the irregularities 131 is arbitrary, and in addition to knurls, teeth shapes formed along the axial direction at a plurality of locations around the circumference (such as serrations and splines) can also be employed. In addition, the irregularities could also be formed on the inner peripheral surface of the inner ring 112, and a radial expansion process performed from the inner diameter side of the narrow diameter end portion 111 then used to cause the irregularities 131 to bite into the outer peripheral surface of the narrow diameter end portion 111, thereby fastening the wheel hub 101 and the inner ring 112 together through plastic deformation.

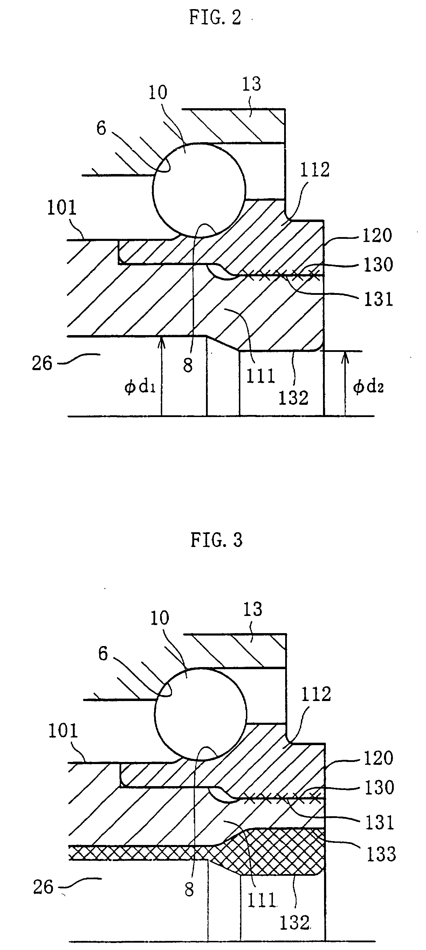

In order to enable this radial expansion swaging process, the inner diameter φd₂ within a fastening portion 132, namely the portion in which the narrow diameter end portion 111 of the wheel hub 101 and the inner ring 112 are fastened together through plastic deformation, must be set to a smaller value than the inner diameter φd₁ of the outboard portion (the portion in which serrations are to be formed), as shown in Fig. 2.

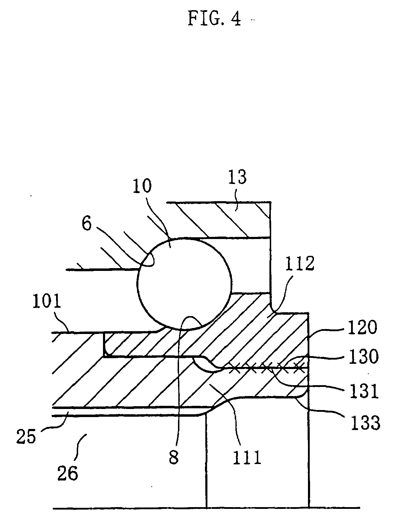

Because the inner diameter φd₂ within the fastening portion 132 for the wheel hub 101 and the inner ring 112 is smaller than the inner diameter φd₁ of the outboard portion (the portion in which serrations are to be formed), forming a serrated portion on the inner peripheral surface of the wheel hub 101 in advance is extremely difficult. For this reason, the wheel hub 101 and the inner ring 112 are first fastened together through plastic deformation, and the inner diameter portion of the wheel hub 101 (showed as a cross-hatched portion in the figure) is then machined, as shown in Fig. 3, before broaching is used to form a serrated portion 25 on the inner peripheral surface of the wheel hub 101, as shown in Fig. 4.

The constant velocity universal joint 3 comprises an inner joint member, and an outer joint member 4 formed from a mouth portion 22 that houses a ball and a retainer, and an axial portion 23 with a serrated portion 24 formed on the outer periphery, which extends from the mouth portion 22 in an axial direction. This axial portion 23 of the outer joint member 4 is inserted through a through-hole 26 in the wheel hub 101, and the serrated portions 24, 25 formed on the outer peripheral surface of the axial portion 23 and the inner peripheral surface of the through-hole 26, respectively, engage to enable the transmission of torque. The constant velocity universal joint 3 is secured to the wheel hub 101 by tightening a nut 27 onto the end of the axial portion 23.

In this bearing device, the plastic deformation portion 130 between the wheel hub 101 and the inner ring 112 prevents removal of the inner ring 112 and achieves preloading of the bearing 2. Because the preloading of the bearing 2 is achieved through this plastic deformation portion 130 produced by radial expansion swaging of the wheel hub 101, there is no need to use the tightening force of the outer joint member 4 by the nut 27 to effect preloading of the bearing 2, and consequently the outer joint member 4 can be secured by the nut 27 at a level of tightening that simply prevents removal from the wheel hub 101.

By fastening the wheel hub 101 and the inner ring 112 together in this manner, through the action of the plastic deformation portion 130 produced by radial expansion swaging, the axial portion 23 of the outer joint member 4 can be secured to the wheel hub 101 by the nut 27, with an inboard end surface 120 of the inner ring 112, which is engaged onto the narrow diameter end portion 111 of the wheel hub 101, contacting a shoulder portion 28 of the outer joint member 4. Because the inboard end surface 120 of the inner ring 112 contacted by the shoulder portion 28 of the outer joint member 4 is a flat surface, wear does not develop between the shoulder portion 28 of the outer joint member 4 and the inboard end portion 120 of the inner ring 112, even when the axial portion 23 of the outer joint member 4 is tightened onto the wheel hub 101 with the nut 27. Furthermore, because a conventional type of swaged portion produced by oscillation type swaging does not exist between the inboard end surface 120 of the inner ring 112 and the shoulder portion 28 of the outer joint member 4, the axial dimension of the bearing device can be reduced.

Furthermore, by machining the inner diameter of the wheel hub 101 between the shoulder portion 28 of the outer joint member 4 and the serrated portion 24, following the radial expansion type swaging of the wheel hub 101, a spigot joint 133 is formed between the inner diameter of the wheel hub 101 and the outer diameter of the outer joint member 4. By forming the spigot joint 133 between the wheel hub 101 and the outer joint member 4 in this manner, a bearing device with higher rigidity relative to moment loads can be produced with relative ease.

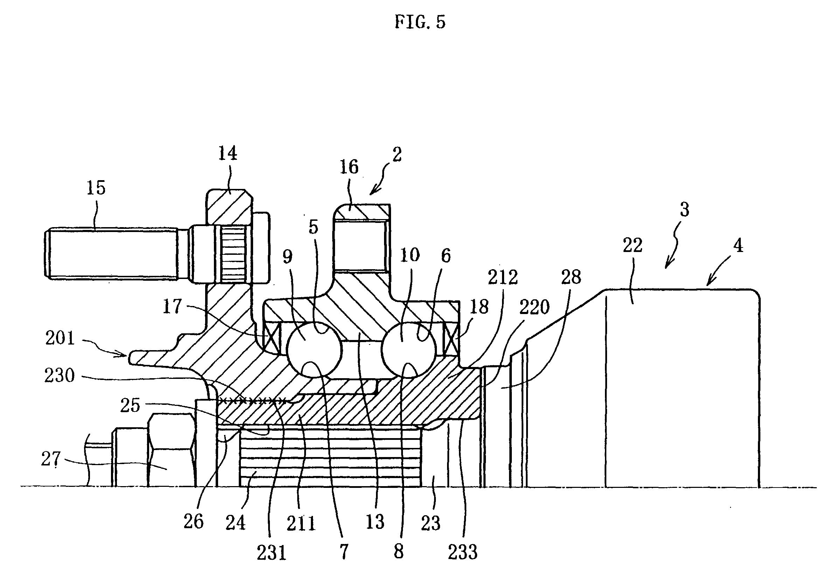

Fig. 5 shows another embodiment of the present invention, in which the formation position of a plastic deformation portion 230 between a wheel hub 201 and an inner ring 212 is different from that of the embodiment shown in Fig. 1. In other words, in the embodiment shown in Fig. 1, the inner ring 112 was engaged onto the outer peripheral surface of the narrow diameter end portion 111 of the wheel hub 101, and the plastic deformation portion 130 between the wheel hub 101 and the inner ring 112 was formed on the inbound side of the device, by a radial expansion type swaging of the narrow diameter end portion 111 of the wheel hub 101 positioned radially inside the inner ring 112.

In contrast, in the embodiment shown in Fig. 5, the outboard side of the inner ring 212 is extended, the wheel hub 201 is engaged onto the outer peripheral surface of a narrow diameter end portion 211 of this extension, and a plastic deformation portion 230 between the wheel hub 201 and the inner ring 212 is formed on the outbound side of the device, by performing a radial expansion type swaging of the narrow diameter end portion 211 of the inner ring 212 positioned radially inside the wheel hub 201.

In the embodiment shown in Fig. 5, as was the case for the embodiment of Fig. 1, the narrow diameter end portion 211 of the inner ring 212 is subjected to a plastic deformation involving a radial expansion swaging, thereby fastening the narrow diameter end portion 211 of the inner ring 212 and the wheel hub 201 together via the plastic deformation portion 230 formed between the two components. This plastic deformation portion 230 generated by a radial expansion swaging combines the wheel hub 201 and the double-row bearing 2 into a single integrated unit, with the plastic deformation portion 230 both preventing removal of the inner ring 212, and preloading the bearing 2.

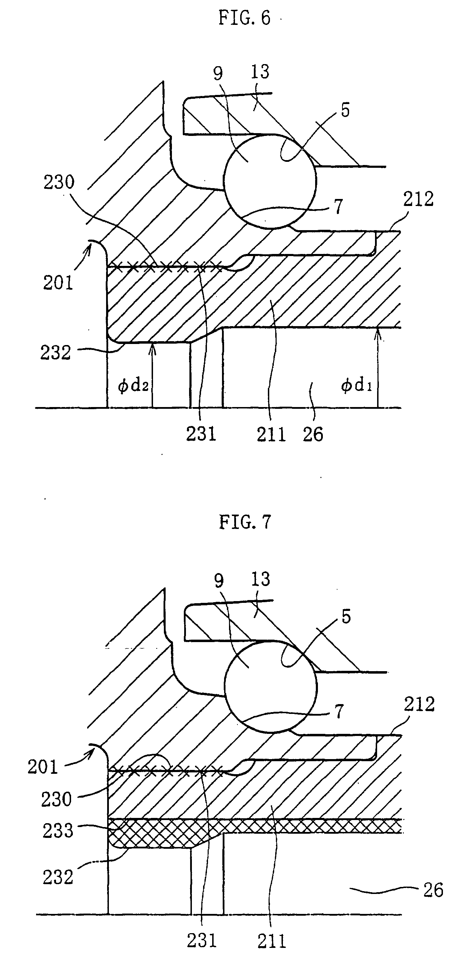

This radial expansion type swaging of the narrow diameter end portion 211 of the inner ring 212 is conducted by forming irregularities 231 (in the drawings, the range over which the irregularities 231 are formed is indicated by the X symbols) on the outer peripheral surface of the narrow diameter end portion 211 of the inner ring 212, using knurling or the like, and then using a radial expansion process, performed from the inner diameter side of the narrow diameter end portion 211, to cause the irregularities 231 to bite into the inner peripheral surface of the wheel hub 201, thereby fastening the wheel hub 201 and the inner ring 212 together through plastic deformation. In order to enable this radial expansion swaging process, the inner diameter φd₂ within a fastening portion 232, namely the portion in which the wheel hub 201 and the narrow diameter end portion 211 of the inner ring 212 are fastened together through plastic deformation, must be set to a smaller value than the inner diameter φd₁ of the inboard section, as shown in Fig. 6.

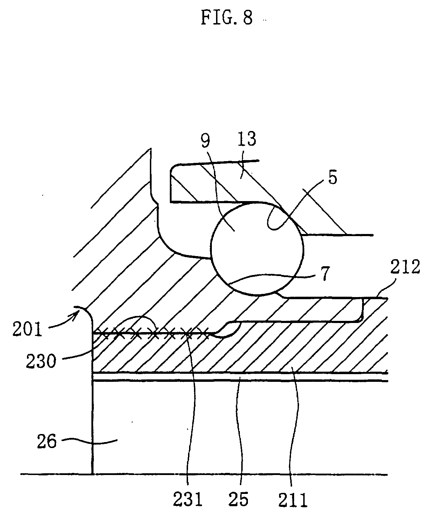

Because the inner diameter φd₂ within the fastening portion 232 for the wheel hub 201 and the inner ring 212 is smaller than the inner diameter φd₁ of the inboard section, forming a serrated portion 25 on the inner peripheral surface of the inner ring 212 in advance is extremely difficult. Accordingly, the wheel hub 201 and the inner ring 212 are first fastened together through plastic deformation, and the inner diameter portion of the inner ring 212 (showed as a cross-hatched portion in the figure) is then machined, as shown in Fig. 7, before broaching is used to form the serrated portion 25 on the inner peripheral surface of the inner ring 212, as shown in Fig. 8.

In this embodiment, as was the case for the first embodiment, by fastening the wheel hub 201 and the inner ring 212 together through the action of the plastic deformation portion 230 produced by radial expansion swaging, the axial portion 23 of the outer joint member 4 of the constant velocity universal joint 3 can be secured to the wheel hub 201 by the nut 27, with an inboard end surface 220 of the inner ring 212 contacting the shoulder portion 28 of the outer joint member 4. Because the inboard end surface 220 of the inner ring 212 contacted by the shoulder portion 28 of the outer joint member 4 is a flat surface, wear does not develop between the shoulder portion 28 of the outer joint member 4 and the inboard end portion 220 of the inner ring 212, even when the axial portion 23 of the outer joint member 4 is tightened onto the wheel hub 201 with the nut 27. Furthermore, because a conventional type of swaged portion produced by oscillation type swaging does not exist between the inboard end surface 220 of the inner ring 212 and the shoulder portion 28 of the outer joint member 4, the axial dimension of the bearing device can be reduced.

Furthermore, a spigot joint 233 is formed in the region between the shoulder portion 28 of the outer joint member 4 and the serrated portion 24, between the inner diameter of the inner ring 212 and the outer diameter of the axial portion 23 of the outer joint member 4. By forming the spigot joint 233 between the inner ring 212 and the outer joint member 4 in this manner, a bearing device with higher rigidity relative to moment loads can be produced with relative ease.

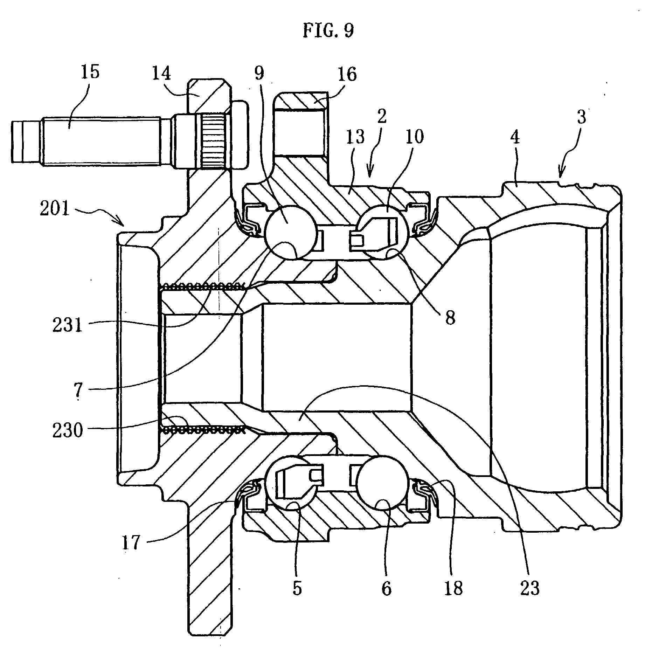

Fig. 9 is a bearing device in which the wheel hub 201, the constant velocity universal joint 3, and the bearing 2 have been integrated into a single unit, and the point of difference from the bearing device of Fig. 5 is that of the two race surfaces 7, 8, one race surface 8 is formed as an integral portion of the outer periphery of the outer joint member 4 of the constant velocity universal joint 3. In the bearing device shown in Fig. 9, the axial portion 23 of the outer joint member 4, which is hollow, is engaged inside the wheel hub 201, irregularities 231 are formed on the inner peripheral surface of the wheel hub 201, and the diameter of the axial portion 23 is expanded causing the axial portion 23 to bite into these irregularities 231, thereby fastening the wheel hub 201 and the outer joint member 4 together via plastic deformation within this engagement section. In this bearing device, loosening of the engagement portion can be prevented more reliably than is achievable with serrations, and wear within the engagement portion can also be suppressed, meaning the durability and operating stability of the unit can be improved.

However, in this bearing device, the irregularities 231 are formed on the inner peripheral surface of the wheel hub 201, which also comprises one of the two race surfaces 7, 8, namely the race surface 7, and because the axial portion 23 of the outer joint member 4 is engaged inside this wheel hub 201 and then undergoes radial expansion and bites into these irregularities 231, thereby fastening the wheel hub 201 and the outer joint member 4 together via plastic deformation within this engagement section, there is a danger of the wheel hub 201 also expanding during this radial expansion process, causing a dimensional deformation in the race surface 7 and a variation in the bearing clearance, and potentially making it difficult to accurately maintain a suitable level of preloading.

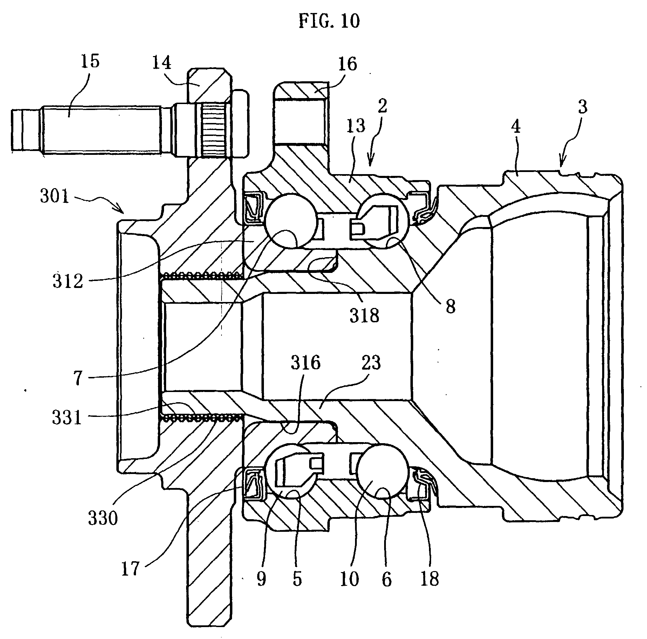

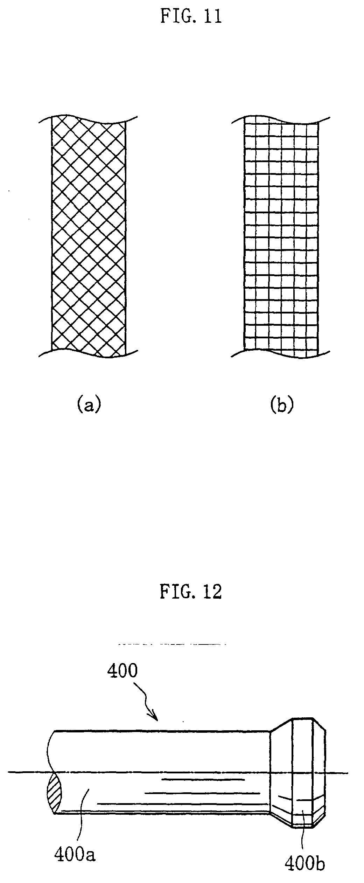

Accordingly, a bearing device with the structure shown in Fig. 10 is preferred. In this bearing device, irregularities 331 are formed on the inner peripheral surface of a wheel hub 301, and heat treatment is used to increase the surface hardness to approximately 60 HRC. This heat treatment can utilize localized heating, and hardening by high frequency induction heating, which enables comparatively easy setting of the depth of the hardened layer, is ideal. One possible shape for the irregularities 331 is a plurality of perpendicularly intersecting grooves. This shape can be formed as a crisscross pattern of either mutually inclined grooves as shown in Fig. 11(a), or grooves aligned along the axial direction and the circumferential direction respectively, as shown in Fig. 11(b).

Of the double-row race surfaces 7, 8 in the bearing 2, one race surface 8 is formed as an integral portion of the outer peripheral surface of the outer joint member 4, and the other race surface 7 is formed on the outer peripheral surface of a separate inner ring 312 that is engaged onto the outer joint member 4. A hollow axial portion 23 of the outer joint member 4 comprises a narrow diameter step portion 316 onto which the inner ring 312 is press fitted, and a plastic deformation portion 330 that engages with the wheel hub 301. The inner ring 312 that is press fitted onto the narrow diameter step portion 316 is butted against, and sandwiched between, an end surface 318 of the axial portion 23 and the wheel hub 301, the plastic deformation portion 330 is engaged inside the wheel hub 301, and the plastic deformation portion 330 is then subjected to radial expansion, causing it to bite into the irregularities 331 on the wheel hub 301, thereby fastening the wheel hub 301 and the outer joint member 4 together, through a swaging of the plastic deformation portion 330.

In the outer joint member 4, the region from the seal land portion around which the seal 18 slides, through to the race surface 8 and the narrow diameter step portion 316 is subjected to surface hardening treatment. Hardening by high frequency induction heating is an ideal treatment. Furthermore, the plastic deformation portion 330 that undergoes radial expansion is preferably left unhardened, with a surface hardness following forging of 10 to 30 HRC, so that the difference in hardness relative to the 60 HRC surface hardness of the irregularities 331 of the wheel hub 301 is at least 30 HRC. This enables the irregularities 331 to bite into the plastic deformation portion 330, forming a powerful plastic deformation fastening action without any collapse of the tips of the irregularities 331.

Fig. 12 shows a jig 400 used for forming the plastic deformation portion 330. The jig comprises a large diameter portion 400b formed as an integral part at one end of a shaft 400a. This large diameter portion 400b is formed with a diameter that is larger, by a predetermined quantity, than the inner diameter dimension of the axial portion 23. By pushing the large diameter portion 400b into the axial portion 23, with the mouth portion of the outer joint member 4 supported, the diameter of the axial portion 23 is expanded, enabling formation of the plastic deformation portion 330.

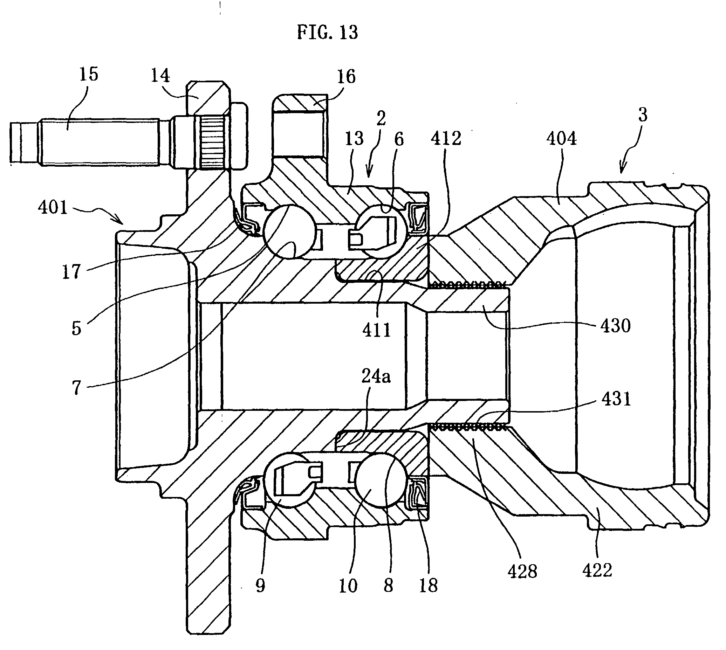

Fig. 13 shows yet another embodiment of a bearing device. This bearing device comprises a wheel hub 401, a bearing 2, and a constant velocity universal joint 3 integrated into a single unit. On the outer peripheral surface of the wheel hub 401 are formed an outboard side race surface 7, a narrow diameter step portion 411 for press fitting of a separate inner ring 412, and a plastic deformation portion 430 that engages with an outer joint member 404 of the constant velocity universal joint 3. An inboard side race surface 8 is formed on the outer peripheral surface of an inner ring 412 that is press fitted onto a narrow diameter step portion 411 of the wheel hub 401.

In the constant velocity universal joint 3, irregularities 431 are formed on the inner peripheral surface of a mouth portion 422 of the outer joint member 404, and heat treatment is used to increase the surface hardness of these irregularities to approximately 60 HRC. This heat treatment can utilize localized heating, and hardening by high frequency induction heating, which enables comparatively easy setting of the depth of the hardened layer, is preferred, although surface hardening treatments using cementation are also suitable. The irregularities 431 are formed in the type of crisscross pattern of perpendicularly intersecting grooves described above.

The end portion of the hollow narrow diameter step portion 411 of the wheel hub 401 is subjected to a radial expansion, and bites into the irregularities 431 of the outer joint member 404, thereby fastening the wheel hub 401 and the outer joint member 404 together through plastic deformation. The end portion of the narrow diameter step portion 411 that undergoes radial expansion is left unhardened, with a surface hardness following forging of 10 to 30 HRC, so that the difference in hardness relative to the 60 HRC surface hardness of the irregularities 431 of the outer joint member 404 is at least 30 HRC. In the wheel hub 401, the region from the seal land portion around which the seal 17 slides, through to the race surface 7 and the narrow diameter step portion 411 is subjected to surface hardening treatment using high frequency induction heating. Moreover, although not shown in the figure, an end gap is inserted in either the hollow wheel hub 401, or the inner diameter at the end of the narrow diameter step portion 411 of the outer joint member 404, thereby preventing leakage of the lubricating grease used to fill the inside of the constant velocity universal joint, and preventing penetration of outside dust.

In a similar manner to the other embodiments, the separate inner ring 412 is press fitted onto the narrow diameter step portion 411 of the wheel hub 401, and is butted against, and sandwiched between a shoulder portion 24a and the end surface of the outer joint member 404. The radial expansion can then be performed by press fitting the aforementioned radial expansion jig 400 into the end portion of the narrow diameter step portion 411, with the wheel hub 401 supported, and because the inner ring 412 is sandwiched as described above, the precision with which the unit can be assembled improves, enabling precise preloading. The bearing clearance for the bearing 2 is determined on the basis of the outside diameter of the race surface 7 on the wheel hub 401 and the distance to the shoulder portion 24a (the groove pitch), and the outside diameter of the race surface 8 on the inner ring 412 and the distance to the end surface of the narrow diameter step portion (the groove pitch). Because these regions are ground simultaneously using a grindstone that has been dressed to a predetermined shape and dimensions, they can be produced with good precision and no variation.

Furthermore, in the case of the embodiment shown in Fig. 13, because the plastic deformation portion is disengaged from the race surfaces, any deformation of the race surfaces arising from the radial expansion can be prevented, and any effects of increased internal temperature within the constant velocity universal joint on the bearing portion can be suppressed. The results of durability tests conducted by the applicants suggest that this type of structure, in combination with a hollow structure for the wheel hub that provides a heat dissipating effect, enable temperature increases to be suppressed by approximately 10°C. A difference of 10°C in the internal temperature of the bearing produces a marked improvement in the durability of the lubricating grease, enabling a significant improvement in the life of the bearing.

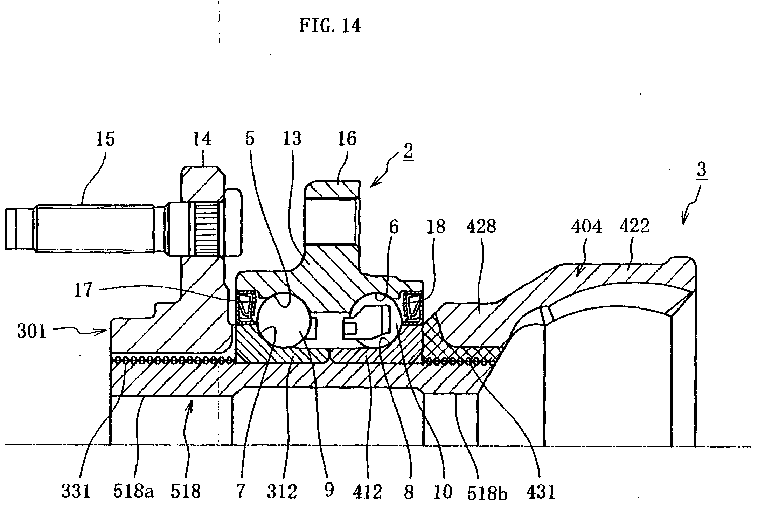

Fig. 14 shows yet another embodiment of a bearing device. This bearing device also comprises a wheel hub 301, a double-row bearing 2, and a constant velocity universal joint 3 integrated into a single unit. Irregularities 331 are formed on the inner peripheral surface of the wheel hub 301, and these irregularities, together with the contact surface with the inner ring 312, are subjected to heat treatment to increase the surface hardness to approximately 60 HRC. This heat treatment can utilize localized heating, and hardening by high frequency induction heating, which enables comparatively easy setting of the depth of the hardened layer, is ideal. In the figure, the hardened layer is shown with cross hatching.

The double-row bearing 2 comprises an outer ring 13, a pair of inner rings 312, 412, and double-row rolling elements 9, 10. Two race surfaces 5, 6 are formed on the inner periphery of the outer ring 13, and race surfaces 7, 8, which oppose the race surfaces 5, 6 of the outer ring 13, are formed on the inner ring 312 and the inner ring 412 respectively. Irregularities 431 are formed on the inner peripheral surface of the shoulder portion 428 of the outer joint member 404, and these irregularities 431, together with the contact surface with the inner ring 412, are subjected to heat treatment to increase the surface hardness to approximately 60 HRC. This heat treatment can utilize localized heating, and hardening by high frequency induction heating, which enables comparatively easy setting of the depth of the hardened layer, is preferred, although surface hardening treatments using cementation are also suitable. In the figure, the hardened layer produced by high frequency induction heating is shown with cross hatching.

The inner rings 312, 412 of the bearing 2 are butted against, and sandwiched between the shoulder portion 428 of the outer joint member 404 and the wheel hub 301, and are engaged around the outside of a hollow circular cylindrically shaped connection member 518. By conducting a radial expansion of the inner diameters 518a, 518b, which correspond with the engagement sections of the circular cylindrically shaped connection member 518, the engagement sections are caused to bite into the irregularities 331 of the wheel hub 301 and the irregularities 431 of the outer joint member 404, thereby fastening the wheel hub 301 and the outer joint member 404 to the circular cylindrically shaped connection member 518 through plastic deformation.

The circular cylindrically shaped connection member 518 that undergoes radial expansion is preferably left unhardened, with a surface hardness of 10 to 30 HRC, so that the difference in hardness relative to the 60 HRC surface hardness of the irregularities 331 of the wheel hub 301 and the irregularities 431 of the outer joint member 404 is at least 30 HRC. This enables the irregularities 331, 431 to bite easily into the circular cylindrically shaped connection member 518, forming a powerful plastic deformation fastening action without any collapse of the tips of the irregularities 331, 431.

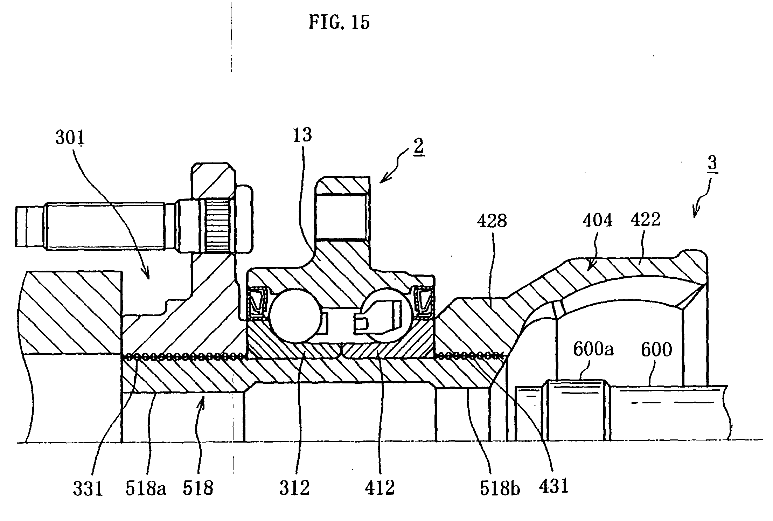

Fig. 15 is an explanatory diagram showing the process for expanding the inner diameter of the circular cylindrically shaped connection member 518, and shows a radial expansion jig 600 being pushed into the circular cylindrically shaped connection member 518 from the mouth 422 of the outer joint member 404. The radial expansion jig 600 has a large diameter portion 600a at its tip, with a diameter that is larger, by a predetermined quantity, than the inner diameter dimension of the circular cylindrically shaped connection member 518. By pushing this large diameter portion 600a into the inner diameter of the circular cylindrically shaped connection member 518, with the outboard side end surface of the wheel hub 301 supported, the outer diameter of the circular cylindrically shaped connection member 518 can be expanded.

The inner diameters 518a, 518b of the circular cylindrically shaped connection member 518 are formed with essentially the same dimensions, and can consequently be expanded by a single process using the same expansion jig 600. In this embodiment, the radial expansion jig 600 enters from the mouth 422 of the outer joint member 404, causing the inner diameter portion 518a of the circular cylindrically shaped connection member 518 to attempt to elongate fractionally towards the outboard side, but provided the resulting spring back compresses the sandwiching of the inner rings 312, 412, and there is no decrease in the initial preloading, then the radial expansion causes no variation in the preloading of the bearing 2, even if, for example, the wheel hub 301 expands.

The inner diameters 518a, 518b of the circular cylindrically shaped connection member 518 need not necessarily have the same dimensions, and if the dimensions are different, then the inner diameter 518b nearer the mouth 422 of the outer joint member 404 is formed with a larger inner diameter than the inner diameter 518a, and either a radial expansion jig with two different sized large diameter sections is inserted from the side of the larger inner diameter, or two different radial expansion jigs are used for the radial expansion, which is conducted as two separate processes.

If the outer diameter of the large diameter portion 600a formed on the radial expansion jig 600 is deemed φD, then the size of the radial expansion φD' is set within a range from φD' = 0.05 to 0.30φD. If the size of the radial expansion φD' is less than 0.05φD, then the irregularities do not bite adequately into the circular cylindrically shaped connection member, and the required pull out strength (100 kN) is not achieved, whereas if the size of the radial expansion φD' exceeds 0.30φD, the loading required in the radial expansion operation increases considerably, resulting in a marked reduction in the operating efficiency.

The bearing clearance for the bearing 2 is determined on the basis of the groove pitch of the double-row race surfaces 5, 6 formed on the inner periphery of the outer ring 13, the distance from the race surfaces 7, 8 formed on the outer periphery of the inner rings 312, 412 through to the end surfaces of the narrow diameter sections (the groove pitch), the diameters of the race surfaces 7, 8, and the outside diameters of the rolling elements (balls) used. In the bearing device shown, because a pair of standard inner rings are used, the device is very suited to mass production, and can be produced with good precision and no variation.

In the case of the embodiment shown, because the plastic deformation sections are disengaged from the race surfaces, any deformation of the race surfaces arising from the radial expansion can be prevented, and any effects of increased internal temperature within the constant velocity universal joint on the bearing portion can be suppressed. The results of durability tests conducted by the applicants suggest that this type of structure, in combination with the hollow structure of the device that provides a heat dissipating effect, enable temperature increases to be suppressed by approximately 10°C. A difference of 10°C in the internal temperature of the bearing produces a marked improvement in the durability of the lubricating grease, enabling a significant improvement in the life of the bearing.

Furthermore, because the wheel hub is subjected to repeated moment loading, it is preferably formed from a material with good flexural strength, although when a structure is employed in which a race surface is formed directly on the outer periphery of the wheel hub, the material must also satisfy certain levels of mechanical strength and rolling fatigue life, and be suitable for forging. Typically, rolling fatigue life and suitability for forging are given priority, and accordingly, medium carbon steel with a C content of 0.40 to 0.70 is the most widely used material.

## Claims

1. A drive wheel bearing device in which a wheel hub and a double-row bearing are integrated into a single unit, and an outer joint member of a constant velocity universal joint is engaged inside any one of the wheel hub and an inner ring of the bearing via torque transmission means, wherein
at least one of race surfaces of the double-row bearing is formed on a separate inner ring that is engaged onto the wheel hub,
irregularities are formed on one of engagement surfaces on any one of the wheel hub and the inner ring, and
by causing the irregularities to bite into the other engagement surface, the wheel hub and the inner ring are fastened together by plastic deformation.

2. The drive wheel bearing device according to claim 1, wherein a spigot joint is formed between an inner diameter of the more inwardly positioned member of the wheel hub and the inner ring, and an outer diameter of the outer joint member.

3. A method of manufacturing a drive wheel bearing device comprising the steps of:
integrating a wheel hub and a double-row bearing into a single unit;
engaging an outer joint member of a constant velocity universal joint inside the wheel hub via torque transmission means;
forming at least one of race surfaces of the double-row bearing on a separate inner ring engaged onto the wheel hub
forming irregularities on one of engagement surfaces on any one of the wheel hub and the inner ring;
causing the irregularities to bite into the other engagement surface thereby fastening the wheel hub and the inner ring together by plastic deformation; and
cutting the inner diameter of this joint portion to a predetermined dimension to form a spigot joint to the outer joint member.

4. The method of manufacturing a drive wheel bearing device according to claim 3, wherein following the fastening of the wheel hub and the inner ring through plastic deformation, a serrated portion is formed on the inner diameter of any one of the wheel hub and the inner ring, before the outer joint member is engaged inside the serrated section.

5. A drive wheel bearing device, in which a wheel hub with an integrated wheel mounting flange at one end; a bearing portion comprising an outer member with an inner periphery that forms double-row race surfaces, an inner member with an outer periphery that forms double-row race surfaces that oppose the race surfaces of the outer member, and double-row rolling elements housed between the race surfaces of the outer member and the inner member; and an outer joint member of a constant velocity universal joint are integrated together into a single unit, so that rotation of the outer joint member is transmitted to the wheel hub, and the wheel hub is able to freely rotate relative to the vehicle body, wherein
at least one of the double-row race surfaces formed on the inner member is formed on a separate inner ring,
hardened irregularities are formed on a radially more outwardly positioned engagement portion of any one of the wheel hub and the outer joint member, and
the diameter of the radially more inwardly positioned member is expanded so as to bite into the irregularities, thereby swaging the engagement portion and plastically fastening the wheel hub and the outer joint member together.

6. The drive wheel bearing device according to claim 5, wherein the separate inner ring is engaged onto the outside of the outer joint member, and one of the double-row race surfaces formed on the inner member is formed as an integrated portion of the outer diameter of the outer joint member.

7. The drive wheel bearing device according to claim 5, wherein the separate inner ring is engaged onto the outside of the wheel hub, and one of the double-row race surfaces formed on the inner member is formed as an integrated portion of the outer diameter of the wheel hub.

8. The drive wheel bearing device according to claim 5, wherein the radially inwardly positioned member at the engagement portion between the wheel hub and the outer joint member is hollow.

9. The drive wheel bearing device according to claim 5, wherein a difference in surface hardness between the radially inwardly positioned member at the engagement portion between the wheel hub and the outer joint member, and the aforementioned irregularities is set to at least 30 HRC.

10. The drive wheel bearing device according to claim 5, wherein the separate inner ring is abutted axially against, and sandwiched between, the wheel hub and the outer joint member.

11. A drive wheel bearing device, in which a wheel hub with an integrated wheel mounting flange, a double-row rolling bearing, and an outer joint member of a constant velocity universal joint are integrated together into a single unit, so that a wheel is able to freely rotate relative to a vehicle body, wherein
the wheel hub, the outer joint member and the rolling bearing are engaged onto the outside of a circular cylindrically shaped connection member, with the rolling bearing sandwiched between the wheel hub and the outer joint member, and
a diameter of the circular cylindrically shaped connection member is expanded outward so as to bite into irregularities formed on an inner diameter of the wheel hub and the outer joint member, thereby plastically fastening the wheel hub and the outer joint member to the circular cylindrically shaped connection member.

12. The drive wheel bearing device according to claim 11, wherein a hardened layer is formed on a surface of the irregularities formed on the inner diameter of the wheel hub and the outer joint member.

13. The drive wheel bearing device according to claim 12, wherein a difference in surface hardness between the irregularities formed on the inner diameter of the wheel hub and the outer joint member, and the circular cylindrically shaped connection member is set to at least 30 HRC.

14. The drive wheel bearing device according to claim 12, wherein a hardened layer is formed on contact surfaces where the wheel hub and the outer joint member contact the rolling bearing.

15. The drive wheel bearing device according to any one of claims 11 to 14, wherein the rolling bearing has an integrated vehicle body mounting flange at an outside periphery thereof, and comprises an inner periphery thereof equipped with an outer ring, on which double-row race surfaces are formed, a pair of inner rings, on which are formed other race surfaces that oppose the double-row race surfaces, double-row rolling elements housed between the race surfaces, and a retainer that retains the rolling elements in a freely rotatable manner.

16. The drive wheel bearing device according to claim 5 or claim 11, wherein an internal clearance of the rolling bearing is made negative.
